(19) Europäisches Patentamt
European Patent Office
Office européen des brevets

(11) **EP 4 363 515 B1**

(12) **EUROPÄISCHE PATENTSCHRIFT**

(45) Veröffentlichungstag und Bekanntmachung des Hinweises auf die Patenterteilung:
**06.08.2025 Patentblatt 2025/32**

(21) Anmeldenummer: **22738614.1**

(22) Anmeldetag: **27.06.2022**

(51) Internationale Patentklassifikation (IPC):
**C09J 7/38** (2018.01)  **C09J 133/04** (2006.01)
**C09J 133/06** (2006.01)  **C09J 133/08** (2006.01)

(52) Gemeinsame Patentklassifikation (CPC):
(C-Sets verfügbar)
**C09J 133/08; C09J 7/38; C09J 133/064;**
C09J 2203/326; C09J 2400/24; C09J 2433/00;
C09J 2453/00                              (Forts.)

(86) Internationale Anmeldenummer:
**PCT/EP2022/067566**

(87) Internationale Veröffentlichungsnummer:
**WO 2023/274961 (05.01.2023 Gazette 2023/01)**

(54) **SCHOCKRESISTENTE HAFTKLEBMASSE**

SHOCK RESISTANT PRESSURE-SENSITIVE ADHESIVE COMPOUND

COMPOSITION ADHÉSIVE RÉSISTANTE AUX CHOCS MÉCANIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.06.2021 DE 102021206697**

(43) Veröffentlichungstag der Anmeldung:
**08.05.2024 Patentblatt 2024/19**

(73) Patentinhaber: **TESA SE**
**22848 Norderstedt (DE)**

(72) Erfinder:
• **PETERSEN, Anika**
**24598 Heidmühlen (DE)**
• **NÄGELE, Ann-Kathrin**
**20259 Hamburg (DE)**

(74) Vertreter: **tesa SE**
**Hugo-Kirchberg-Straße 1**
**22848 Norderstedt (DE)**

(56) Entgegenhaltungen:
**US-A1- 2015 037 560    US-A1- 2017 313 910**
**US-A1- 2019 345 367**

(52) Gemeinsame Patentklassifikation (CPC): (Forts.)

C-Sets
**C09J 133/064, C08L 53/02;**
**C09J 133/08, C08L 53/02;**
C08F 220/1804, C08F 220/301, C08F 220/16,
C08F 220/06

**Beschreibung**

Die Erfindung betrifft das technische Gebiet der Haftklebmassen, wie sie als solche oder als Bestandteil von Klebebändern in unterschiedlichsten Bereichen der Technik eingesetzt werden. Insbesondere schlägt die Erfindung eine schockresistente Haftklebmasse mit guter Kohäsion auf Basis von Poly(meth)acrylat und einer spezifischen Synthesekautschukkomponente vor. Die erfindungsgemäße Haftklebmasse kann insbesondere in der Herstellung elektronischer Geräte verwendet werden.

In vielen Technologiebereichen werden zunehmend Klebebänder zur Verbindung von Bauteilen eingesetzt. Immer häufiger kommt es vor, dass die Klebebänder dabei sehr unterschiedlichen und häufig sogar sich gegenseitig entgegenstehenden Anforderungen genügen müssen. Fast immer ist z.B. eine gute Adhäsion gewünscht, oft aber auch in Verbindung mit guter Kohäsion. Die Adhäsion beruht wesentlich auf dem Vermögen der Haftklebmasse des Klebebands, auf den Klebuntergrund aufzufließen. Eine verbesserte Kohäsion bedingt aber in der Regel eine Erhöhung der Viskosität der Haftklebmasse und verringert somit ihr Auffließvermögen. Aus diesem schematischen Bespiel lässt sich erahnen, dass bei der Formulierung von Haftklebmassen die Einflüsse der verschiedenen Komponenten sehr sorgfältig austariert werden müssen, um ein befriedigendes Gesamtergebnis zu erzielen.

In diesem Kontext werden seit einiger Zeit Haftklebmassen auf der Basis eines Gemischs bzw. Blends von Poly(meth)acrylat mit einem oder mehreren Synthesekautschuken formuliert. Auf diese Weise lassen sich z.B. Haftklebmassen erzielen, die nicht nur - der Natur der Polyacrylat-Komponente entsprechend - auf Klebuntergründen mit vergleichsweise hoher Oberflächenenergie gute Klebkräfte erreichen, sondern auch auf solchen mit mittlerer oder niedriger Oberflächenenergie, wie sie beispielsweise bestimmte Kunststoffoberflächen oder auch Lacke aufweisen.

Im Stand der Technik finden sich zahlreiche Beispiele dafür, wie bestimmte Eigenschaftsprofile von Haftklebmassen durch gezielte Auswahl von Poly(meth)acrylat und Synthesekautschukkomponenten verwirklicht werden.

US 4,107,233 A beschreibt eine Verbesserung der Adhäsion und der Bedruckbarkeit zu bzw. von Styrol-Butadien-Copolymeren (SBC) durch Zusatz von Polyacrylat.

EP 0 349 216 A1 offenbart eine Verbesserung der Kälteschlagfestigkeit von Polyacrylat-Haftklebmassen durch den Zusatz von SBC, wobei 95 bis 65 Teile Polyacrylat mit 5 bis 35 Teilen SBC abgemischt werden.

EP 0 352 901 A1 betrifft Haftklebmassen, die 60 bis 95 Teile eines UV-polymerisierten Polyacrylats und 35 bis 5 Teile eines Synthesekautschuks enthalten. Durch diese Rezeptierung werden die Kaltschlagfestigkeit und die Verklebung auf Farben verbessert.

EP 0 437 068 A2 offenbart zelluläre haftklebrige Membranen basierend auf Polyacrylat/SBC-Blends mit verbesserter Kälteschlagfestigkeit.

In WO 95/19393 A1 ist ein Blend aus einem mit einer Carboxylgruppe modifizierten Styrol-Blockcopolymer und einem zumindest eine Stickstoff-haltige Monomersorte enthaltenden Polyacrylat beschrieben. Ein Ziel dieser Technologie ist die Verbesserung der Klebeeigenschaften auf niedrigenergetischen Untergründen.

WO 2008/070386 A1 beschreibt Polymerblends, die mindestens 92 Teile einer SBCbasierten Klebmasse und bis zu 10 Teile einer Polyacrylat-Komponente enthalten.

WO 2000/006637 A1 offenbart Blends aus Polyacrylaten und SBC als Basis geschäumter Klebmasseschichten.

EP 2 832 811 A1 stellt eine Haftklebmasse vor, die gute Klebkräfte sowohl bei hohen als auch bei niedrigen Temperaturen erzielen soll. Die Haftklebmasse enthält folgende Komponenten:

40 - 70 Gew.-% mindestens eines Poly(meth)acrylats,

15 - 50 Gew.-% mindestens eines Synthesekautschuks, und

mindestens einen mit dem Poly(meth)acrylat verträglichen Tackifier.

Auch in der Herstellung elektronischer Geräte werden im Zuge des anhaltenden Trends zur Miniaturisierung der Geräte zunehmend Klebebänder beziehungsweise Haftklebmassen eingesetzt. Auf diese Weise lassen sich die Verbindungen zwischen den Bauteilen wesentlich positionsgenauer und platzsparender realisieren. Da jedoch wegen der weltweit immer noch erheblichen Nachfrage nach Kommunikations- und Unterhaltungselektronik auch die Anforderungen an die Leistungsfähigkeit der Geräte stetig steigen, unterliegen auch die verwendeten Haftklebmassen ständig neuen, zumindest aber wachsenden Anforderungen an ihre Performance.

Es war eine Aufgabe der Erfindung, eine Haftklebmasse mit guter Schockresistenz und hoher innerer Festigkeit, letzteres insbesondere gegenüber Belastungen in z-Richtung, zur Verfügung zu stellen. Natürlich sollte die Haftklebmasse auch über gute adhäsive Eigenschaften verfügen.

Es war eine weitere Aufgabe der Erfindung, die anzugebende Haftklebmasse so auszugestalten, dass sie neben den schon genannten Eigenschaften auch eine gute Chemikalienresistenz aufweist, insbesondere gegen amphiphile Substanzen.

Der Lösung der Aufgabe liegt der Gedanke zugrunde, eine mit einer spezifisch formulierten Synthesekautschukkomponente abgemischte, Poly(meth)acrylat-basierte Haftklebmasse einzusetzen.

Ein erster und allgemeiner Gegenstand der Erfindung ist eine Haftklebmasse, die

a) mindestens 50 Gew.-%, bezogen auf das Gesamtgewicht der Haftklebmasse, mindestens eines Poly(meth)acrylats;

b) 15 - 35 Gew.-%, bezogen auf das Gesamtgewicht der Haftklebmasse, einer Synthesekautschukkomponente, umfassend mindestens ein Vinylaromat-Butadien-Blockcopolymer und mindestens ein Vinylaromat-Isopren-Blockcopolymer; und

c) mindestens ein mit der Synthesekautschukkomponente verträgliches Klebharz

umfasst und dadurch gekennzeichnet ist, dass das Gewichtsverhältnis Vinylaromat-Butadien-Blockcopolymer(e) : Vinylaromat-Isopren-Blockcopolymer(e) 1,1 : 1 bis 2,5 : 1 beträgt.

Mit einer derartigen Haftklebmasse ließ sich das geforderte Eigenschaftsprofil realisieren.

Unter einer Haftklebmasse wird im Einklang mit dem allgemeinen Verständnis ein Material verstanden, welches über die Eigenschaft verfügt, bereits unter relativ schwachem Andruck eine dauerhafte Verbindung zu einem Haftgrund einzugehen. Haftklebmassen sind in der Regel bei Raumtemperatur permanent eigenklebrig, d.h. sie weisen eine gewisse Viskosität und Anfassklebrigkeit auf. Dies wird insbesondere darauf zurückgeführt, dass sie die Oberfläche eines Untergrunds bereits bei geringem Andruck benetzen.

Ohne an diese Theorie gebunden sein zu wollen, wird häufig davon ausgegangen, dass eine Haftklebmasse als extrem hochviskose Flüssigkeit mit einem elastischen Anteil betrachtet werden kann, die demzufolge charakteristische viskoelastische Eigenschaften aufweist, die zu der vorstehend beschriebenen dauerhaften Eigenklebrigkeit und Haftklebefähigkeit führen. Man geht davon aus, dass es bei Haftklebmassen bei mechanischer Deformation sowohl zu viskosen Fließprozessen als auch zum Aufbau elastischer Rückstellkräfte kommt. Der anteilige viskose Fluss dient dabei zur Erzielung von Adhäsion, während die anteiligen elastischen Rückstellkräfte insbesondere zur Erzielung von Kohäsion notwendig sind. Die Zusammenhänge zwischen der Rheologie und der Haftklebrigkeit sind im Stand der Technik bekannt und beispielsweise in "Satas, Handbook of Pressure Sensitive Adhesives Technology", Third Edition, (1999), Seiten 153 bis 203, beschrieben.

Zur Charakterisierung des Maßes an elastischem und viskosem Anteil werden üblicherweise der Speichermodul (G') und der Verlustmodul (G") herangezogen, die mittels dynamisch mechanischer Analyse (DMA), beispielsweise unter Verwendung eines Rheometers, ermittelt werden können, wie es beispielsweise in der WO 2015/189323 A1 offenbart wird.

Im Rahmen der vorliegenden Erfindung wird eine Klebmasse vorzugsweise dann als haftklebrig und somit als Haftklebmasse verstanden, wenn bei einer Temperatur von 23 °C im Deformationsfrequenzbereich von $10^0$ bis $10^1$ rad/sec G' und G" jeweils zumindest zum Teil im Bereich von $10^3$ bis $10^7$ Pa liegen.

Poly(meth)acrylate sind dem Fachmann grundsätzlich bekannt. Im Rahmen der vorliegenden Erfindung umfasst der Ausdruck "Poly(meth)acrylate" in Übereinstimmung mit dem fachmännischen Verständnis sowohl Polyacrylate als auch Polymethacrylate.

Erfindungsgemäß umfasst die Haftklebmasse mindestens 50 Gew.-% mindestens eines Poly(meth)acrylats. Grundsätzlich kann die Haftklebmasse sowohl (genau) ein Poly(meth)acrylat als auch mehrere Poly(meth)acrylate umfassen. Sofern im Folgenden der Plural "Poly(meth)acrylate" benutzt wird, schließt dies ausdrücklich auch die Ausführungsform mit (genau) einem Poly(meth)acrylat ein.

Bevorzugt umfasst die erfindungsgemäße Haftklebmasse Poly(meth)acrylate zu maximal 70 Gew.-%, insbesondere 52 bis 65 Gew.-%, ganz besonders bevorzugt zu 54 bis 60 Gew.-%.

Die Glasübergangstemperatur des Poly(meth)acrylats der erfindungsgemäßen Haftklebmasse beträgt bevorzugt < 10 °C, stärker bevorzugt < 0 °C, besonders bevorzugt beträgt sie zwischen -5 und -30 °C. Die Glasübergangstemperatur von Polymeren oder von Polymerblöcken in Blockcopolymeren wird erfindungsgemäß mittels Dynamischer Scanning Kalorimetrie (DSC) bestimmt. Dazu werden ca. 5 mg einer unbehandelten Polymerprobe in ein Aluminiumtiegelchen (Volumen 25 μl) eingewogen und mit einem gelochten Deckel verschlossen. Zur Messung wird ein DSC 204 F1 der Firma Netzsch verwendet. Es wird zwecks Inertisierung unter Stickstoff gearbeitet. Die Probe wird zunächst auf -150 °C abgekühlt, dann mit einer Heizrate von 10 K/min bis +150 °C aufgeheizt und erneut auf -150 °C abgekühlt. Die sich anschließende zweite Heizkurve wird erneut bei 10 K/min gefahren und die Änderung der Wärmekapazität aufgenommen. Glasübergänge werden als Stufen im Thermogramm erkannt.

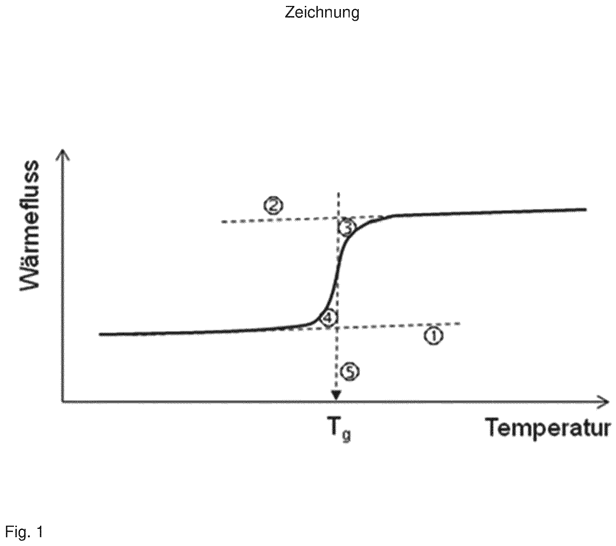

Die Glasübergangstemperatur wird folgendermaßen erhalten (siehe Figur 1):
Der jeweils linear verlaufende Bereich der Messkurve vor und nach der Stufe wird in Richtung steigender (Bereich vor der Stufe) bzw. fallender (Bereich nach der Stufe) Temperaturen verlängert (Verlängerungsgeraden ① und ②). Im Bereich der Stufe wird eine Ausgleichsgerade ⑤ parallel zur Ordinate so gelegt, dass sie die beiden Verlängerungslinien schneidet, und zwar so, dass zwei Flächen ③ und ④ (zwischen der jeweils einen Verlängerungslinie, der Ausgleichsgeraden und der Messkurve) gleichen Inhalts entstehen. Der Schnittpunkt der so positionierten Ausgleichsgeraden mit der Messkurve ergibt die Glasübergangstemperatur.

Bevorzugt enthält das Poly(meth)acrylat der erfindungsgemäßen Haftklebmasse zumindest ein anteilig einpolymerisiertes, funktionelles, besonders bevorzugt mit Epoxidgruppen unter Ausbildung einer kovalenten Bindung reaktives Monomer. Ganz besonders bevorzugt enthält das anteilig einpolymerisierte funktionelle, besonders bevorzugt mit Epoxidgruppen unter Ausbildung einer kovalenten Bindung reaktive Monomer mindestens eine funktionelle Gruppe ausgewählt aus der Gruppe bestehend aus Carbonsäuregruppen, Sulfonsäuregruppen, Phosphonsäuregruppen, Hydroxygruppen, Säureanhydridgruppen, Epoxidgruppen und Aminogruppen; insbesondere enthält es mindestens eine Carbonsäuregruppe. Äußerst bevorzugt enthält das Poly(meth)acrylat der erfindungsgemäßen Haftklebmasse anteilig einpolymerisierte Acrylsäure und/oder Methacrylsäure. All die genannten Gruppen weisen eine Reaktivität mit Epoxidgruppen auf, wodurch das Poly(meth)acrylat vorteilhaft einer thermischen Vernetzung mit eingebrachten Epoxiden zugänglich wird.

Das Poly(meth)acrylat der erfindungsgemäßen Haftklebmasse lässt sich bevorzugt auf die folgende Monomerzusammensetzung zurückführen:

a) 30 bis 75 Gew.-% mindestens eines Acrylsäureesters gemäß der Formel (I)

$$CH_2{=}CH{-}C(O)OR^1 \qquad (I),$$

worin $R^1$ für eine lineare oder verzweigte Alkylgruppe mit 1 bis 10 C-Atomen steht;

b) 20 bis 65 Gew.-% mindestens eines Acrylsäureesters gemäß der Formel (II)

$$CH_2{=}CH{-}C(O)OR^2 \qquad (II),$$

worin $R^2$ für einen Phenoxyalkylrest steht;

c) 0 bis 40 Gew.-% mindestens eines Acrylsäureesters der Formel (III)

$$CH_2{=}C(O)OR^3 \qquad (III),$$

worin $R^3$ für einen Alkyldiglykolrest oder einen Alkoxyalkylrest steht;

d) 0,5 bis 10 Gew.-% mindestens eines Acrylatmonomers gemäß der Formel (IV)

$$CH_2{=}CH{-}C(O)OR^4 \qquad (IV),$$

worin $R^4$ für ein H-Atom oder einen Hydroxyalkylrest mit 1 bis 4 C-Atomen steht.

Wie sich gezeigt hat, weisen derartige Polyacrylate neben guten Haftklebeigenschaften auch eine hohe Chemikalienbeständigkeit auf und sind daher sehr gut als Basismaterial für eine erfindungsgemäße Haftklebmasse geeignet.

$R^1$ in der Formel (I) steht bevorzugt für einen Rest ausgewählt aus der Gruppe bestehend aus Methyl-, n-Butyl- und 2-Ethylhexylresten, besonders bevorzugt aus n-Butyl- und 2-Ethylhexylresten. Ganz besonders bevorzugt steht $R^1$ in der Formel (I) für einen n-Butylrest.

$R^2$ in der Formel (II) steht bevorzugt für einen Phenoxyethylrest, insbesondere einen 2-Phenoxyethylrest. Bevorzugt umfasst die dem Poly(meth)acrylat der erfindungsgemäßen Haftklebmasse zugrundeliegende Monomerenzusammensetzung Phenoxyethylacrylat zu 22 bis 60 Gew.-%.

$R^3$ in der Formel (III) steht bevorzugt für einen Ethyldiglykolrest oder einen Methoxyethylrest. Bevorzugt umfasst die dem Poly(meth)acrylat der erfindungsgemäßen Haftklebmasse zugrundeliegende Monomerenzusammensetzung Monomere c) zu 1 bis 40 Gew.-%.

$R^4$ in der Formel (IV) steht bevorzugt für ein Wasserstoff-Atom.

In einer Ausführungsform ist das Poly(meth)acrylat der erfindungsgemäßen Haftklebmasse auf folgende Monomerenzusammensetzung zurückzuführen: n-Butylacrylat zu 30 bis 55 Gew.-%, Methylacrylat zu 0 bis 25 Gew.-%, Ethyldiglykolacrylat zu 0 bis 40 Gew.-%, Methoxyethylacrylat zu 0 bis 25 Gew.-%, Phenoxyethylacrylat zu 20 bis 55 Gew.-% und Acrylsäure zu 1 bis 5 Gew.-%.

Besonders bevorzugt ist das Poly(meth)acrylat der erfindungsgemäßen Haftklebmasse auf folgende Monomerenzusammensetzung zurückzuführen: n-Butylacrylat zu 40 bis 50 Gew.-%, Methylacrylat zu 15 bis 25 Gew.-%, Phenoxyethylacrylat zu 20 bis 40 Gew.-% und Acrylsäure zu 1 bis 5 Gew.-%.

Sofern die erfindungsgemäße Haftklebmasse mehrere Poly(meth)acrylate umfasst, sind bevorzugt alle Poly(meth)acrylate auf eine der vorstehend beschriebenen Monomerenzusammensetzungen zurückzuführen.

Zur Herstellung der Poly(meth)acrylate können prinzipiell alle radikalischen oder radikalisch-kontrollierten Polymerisationen eingesetzt werden, ebenso Kombinationen verschiedener Polymerisationsverfahren. Neben der konventionellen, freien radikalischen Polymerisation sind dies z. B. auch die ATRP, die Nitroxid/TEMPO- kontrollierte Polymerisation oder der RAFT-Prozess. Die Poly(meth)acrylate können durch Copolymerisation der Monomere unter Verwendung üblicher Polymerisationsinitiatoren sowie gegebenenfalls von Reglern hergestellt werden, wobei bei den üblichen Temperaturen in Substanz, in Emulsion, zum Beispiel in Wasser oder flüssigen Kohlenwasserstoffen, oder in Lösung polymerisiert wird.

Bevorzugt werden die Poly(meth)acrylate durch Copolymerisation der Monomere in Lösungsmitteln, besonders bevorzugt in Lösungsmitteln mit einem Siedebereich von 50 bis 150 °C, insbesondere von 60 bis 120 °C, unter Verwendung von 0,01 bis 5 Gew.-%, insbesondere von 0,1 bis 2 Gew.-%, jeweils bezogen auf das Gesamtgewicht der Monomeren, an Polymerisationsinitiatoren hergestellt.

Prinzipiell eignen sich alle üblichen Initiatoren. Beispiele für Radikalquellen sind Peroxide, Hydroperoxide und Azoverbindungen, zum Beispiel Dibenzoylperoxid, Cumolhydroperoxid, Cyclohexanonperoxid, Di-t-butylperoxid, Cyclohexylsulfonylacetylperoxid, Diisopropylpercarbonat, t-Butylperoktoat und Benzpinacol. Bevorzugte radikalische Initiatoren sind 2,2'-Azobis(2-methylbutyronitril) oder 2,2'-Azobis(2-methylpropionitril) (2,2'-Azobisisobutyronitril).

Bevorzugte Lösungsmittel für die Herstellung der Poly(meth)acrylate sind Alkohole wie Methanol, Ethanol, n- und iso-Propanol, n- und iso-Butanol, insbesondere Isopropanol und/oder Isobutanol; Kohlenwasserstoffe wie Toluol und insbesondere Benzine eines Siedebereichs von 60 bis 120 °C; Ketone, insbesondere Aceton, Methylethylketon, Methylisobutylketon; Ester wie Essigsäureethylester sowie Gemische der vorstehend genannten Lösungsmittel. Besonders bevorzugte Lösungsmittel sind Gemische, die Isopropanol in Mengen von 2 bis 15 Gew.-%, insbesondere von 3 bis 10 Gew.-%, jeweils bezogen auf das eingesetzte Lösungsmittelgemisch, enthalten.

Bevorzugt erfolgt nach der Herstellung (Polymerisation) der Poly(meth)acrylate eine Aufkonzentration, und die weitere Verarbeitung der Poly(meth)acrylate, insbesondere das Abmischen mit den weiteren Bestandteilen der erfindungsgemäßen Haftklebmasse, erfolgt im Wesentlichen lösemittelfrei. Die Aufkonzentration des Polymerisats kann in Abwesenheit von Vernetzer- und Beschleunigersubstanzen geschehen. Es ist aber auch möglich, eine dieser Verbindungsklassen dem Polymerisat bereits vor der Aufkonzentration zuzusetzen, so dass die Aufkonzentration dann in Gegenwart dieser Substanz(en) erfolgt.

Die Polymerisate können nach dem Aufkonzentrationsschritt in einen Compounder überführt werden. Gegebenenfalls können die Aufkonzentration und die Compoundierung auch im selben Reaktor stattfinden.

Die gewichtsmittleren Molekulargewichte $M_w$ der Poly(meth)acrylate liegen bevorzugt in einem Bereich von 20.000 bis 2.000.000 g/mol; sehr bevorzugt in einem Bereich von 100.000 bis 1.500.000 g/mol, äußerst bevorzugt in einem Bereich von 150.000 bis 1.000.000 g/mol. Dazu kann es vorteilhaft sein, die Polymerisation in Gegenwart geeigneter Polymerisationsregler wie Thiole, Halogenverbindungen und/oder Alkohole durchzuführen, um das gewünschte mittlere Molekulargewicht einzustellen.

Die Angaben der zahlenmittleren Molmasse $M_n$ und der gewichtsmittleren Molmasse $M_w$ in dieser Schrift beziehen sich auf die an sich bekannte Bestimmung per Gelpermeationschromatographie (GPC). Die Bestimmung erfolgt an 100 $\mu$l klarfiltrierter Probe (Probenkonzentration 4 g/l). Als Eluent wird Tetrahydrofuran mit 0,1 Vol.-% Trifluoressigsäure eingesetzt. Die Messung erfolgt bei 25 °C.

Als Vorsäule wird eine Säule Typ PSS-SDV, 5 $\mu$m, $10^3$ Å, 8,0 mm * 50 mm (Angaben hier und im Folgenden in der Reihenfolge: Typ, Partikelgröße, Porosität, Innendurchmesser * Länge; 1 Å = $10^{-10}$ m) verwendet. Zur Auftrennung wird eine Kombination der Säulen des Typs PSS-SDV, 5 $\mu$m, $10^3$ Å sowie $10^5$ Å und $10^6$ Å mit jeweils 8,0 mm * 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung wird mittels des kommerziell verfügbaren ReadyCal-Kit Poly(styrene) high der Firma PSS Polymer Standard Service GmbH, Mainz, durchgeführt. Diese wird anhand der Mark-Houwink-Parameter K und alpha universell in Polymethylmethacrylat (PMMA) umgerechnet, so dass die Angabe der Daten in PMMA-Massenäquivalenten erfolgt.

Die Poly(meth)acrylate haben vorzugsweise einen K-Wert von 30 bis 90, besonders bevorzugt von 40 bis 70, gemessen in Toluol (1%ige Lösung, 21 °C). Der K-Wert nach Fikentscher ist ein Maß für das Molekulargewicht und die Viskosität von Polymeren.

Das Prinzip der Methode zur Bestimmung des K-Werts beruht auf der kapillarviskosimetrischen Bestimmung der relativen Lösungsviskosität. Hierzu wird die Testsubstanz in Toluol durch dreißigminütiges Schütteln aufgelöst, so dass man eine 1 %-ige Lösung erhält. In einem Vogel-Ossag-Viskosimeter wird bei 25 °C die Auslaufzeit gemessen und daraus in Bezug auf die Viskosität des reinen Lösungsmittels die relative Viskosität der Probenlösung bestimmt. Aus Tabellen kann nach Fikentscher [P. E. Hinkamp, Polymer, 1967, 8, 381] der K-Wert abgelesen werden (K = 1000 k).

Bevorzugt weist das Poly(meth)acrylat der erfindungsgemäßen Haftklebmasse eine Polydispersität PD < 4 und somit eine relativ enge Molekulargewichtsverteilung auf. Darauf basierende Massen haben trotz eines relativ niedrigen Molekulargewichts nach dem Vernetzen eine besonders gute Scherfestigkeit. Zudem ermöglicht die niedrigere Polydispersität eine leichtere Verarbeitung aus der Schmelze, da die Fließviskosität gegenüber einem breiter verteilten Poly(meth)acrylat bei weitgehend gleichen Anwendungseigenschaften geringer ist. Eng verteilte Poly(meth)acrylate können vorteilhaft durch anionische Polymerisation oder durch kontrollierte radikalische Polymerisationsmethoden hergestellt werden, wobei letztere besonders gut geeignet sind. Auch über N-Oxyle lassen sich entsprechende Poly(meth)acrylate herstellen. Ferner lässt sich in vorteilhafter Weise die Atom Transfer Radical Polymerization (ATRP) zur Synthese eng verteilter Poly(meth)acrylate einsetzen, wobei als Initiator bevorzugt monofunktionelle oder difunktionelle sekundäre oder tertiäre Halogenide und zur Abstraktion der Halogenide Cu-, Ni-, Fe-, Pd-, Pt-, Ru-, Os-, Rh-, Co-, Ir-, Ag- oder Au-Komplexe eingesetzt werden. Auch RAFT-Polymerisation ist geeignet.

Die Poly(meth)acrylate der erfindungsgemäßen Haftklebmasse sind bevorzugt vernetzt. Besonders bevorzugt sind sie thermisch vernetzt, das heißt sie sind durch Verknüpfungsreaktionen - insbesondere im Sinne von Additions- oder Substitutionsreaktionen - von in ihnen enthaltenen funktionellen Gruppen mit eigens zugesetzten Vernetzersubstanzen vernetzt. Es können alle thermischen Vernetzer verwendet werden, die

- sowohl eine ausreichend lange Verarbeitungszeit gewährleisten, sodass es nicht zu einer Vergelung während des Verarbeitungsprozesses, insbesondere des Extrusionsprozesses, kommt,

- als auch zu einer schnellen Nachvernetzung des Polymers auf den gewünschten Vernetzungsgrad bei niedrigeren Temperaturen als der Verarbeitungstemperatur, insbesondere bei Raumtemperatur, führen.

Eine thermische Vernetzung kann unter wesentlich milderen Bedingungen durchgeführt werden als z.B. eine strahlungsinduzierte Vernetzung, die gelegentlich auch zerstörend wirken kann. Grundsätzlich ist es im Rahmen der Erfindung aber auch möglich, eine Vernetzung der Poly(meth)acrylate ausschließlich oder zusätzlich durch aktinische Strahlung zu bewirken, wobei gegebenenfalls erforderliche oder fördernde Vernetzersubstanzen zugesetzt werden können, z.B. UV-Vernetzer.

Bevorzugt sind die Poly(meth)acrylate der erfindungsgemäßen Haftklebmasse mittels Epoxid(en) bzw. mittels einer oder mehrerer epoxidgruppenhaltigen Substanz(en) vernetzt. Bei den epoxidgruppenhaltigen Substanzen handelt es sich insbesondere um multifunktionelle Epoxide, also solche mit zumindest zwei Epoxidgruppen; entsprechend kommt es insgesamt zu einer mittelbaren Verknüpfung der die funktionellen Gruppen tragenden Bausteine der Poly(meth)acrylate. Die epoxidgruppenhaltigen Substanzen können sowohl aromatische als auch aliphatische Verbindungen sein.

Hervorragend geeignete multifunktionelle Epoxide sind Oligomere des Epichlorhydrins, Epoxyether mehrwertiger Alkohole, insbesondere Ethylen-, Propylen-, und Butylenglycole, Polyglycole, Thiodiglycole, Glycerin, Pentaerythrit, Sorbit, Polyvinylalkohol, Polyallylalkohol und ähnliche; Epoxyether mehrwertiger Phenole, insbesondere Resorcin, Hydrochinon, Bis-(4-hydroxyphenyl)-methan, Bis-(4-hydroxy-3-methylphenyl)-methan, Bis-(4-hydroxy-3,5-dibromphenyl)-methan, Bis-(4-hydroxy-3,5-difluorphenyl)-methan, 1,1-Bis-(4-hydroxyphenyl)ethan, 2,2-Bis-(4-hydroxyphenyl)propan, 2,2-Bis-(4-hydroxy-3-methylphenyl)-propan, 2,2-Bis-(4-hydroxy-3-chlorphenyl)-propan, 2,2-Bis-(4-hydroxy-3,5-dichlorphenyl)-propan, 2,2-Bis-(4-hydroxy-3,5-dichlorphenyl)-propan, Bis-(4-hydroxyphenyl)-phenylmethan, Bis-(4-hydroxyphenyl)-phenylmethan, Bis-(4-hydroxyphenyl)diphenylmethan, Bis (4-hydroxyphenyl)-4'-methylphenylmethan, 1,1-Bis-(4-hydroxyphenyl)-2,2,2-trichlorethan, Bis-(4-hydroxyphenyl)-(4-chlorphenyl)-methan, 1,1-Bis-(4-hydroxyphenyl)-cyclohexan, Bis-(4-hydroxyphenyl)-cyclohexylmethan, 4,4'-Dihydroxydiphenyl, 2,2'-Dihydroxydiphenyl, 4,4'-Dihydroxydiphenylsulfon sowie deren Hydroxyethylether; Phenol-Formaldehyd-Kondensationsprodukte wie Phenolalkohole und Phenolaldehydharze; S- und N-haltige Epoxide, zum Beispiel N,N-Diglycidylanilin und N,N'-Dimethyldiglycidyl-4,4-Diaminodiphenylmethan; sowie Epoxide, welche nach üblichen Verfahren aus mehrfach ungesättigten Carbonsäuren oder einfach ungesättigten Carbonsäureestern ungesättigter Alkohole hergestellt worden sind; Glycidylester; Polyglycidylester, die durch Polymerisation oder Mischpolymerisation von Glycidylestern ungesättigter Säuren gewonnen werden können oder aus anderen sauren Verbindungen, zum Beispiel aus Cyanursäure, Diglycidylsulfid oder cyclischem Trimethylentrisulfon bzw. dessen Derivaten erhältlich sind.

Sehr geeignete Ether sind beispielsweise 1,4-Butandioldiglycidether, Polyglycerol-3-glycidether, Cyclohexandimethanoldiglycidether, Glycerintriglycidether, Neopentylglykoldiglycidether, Pentaerythrittetraglycidether, 1,6-Hexandioldiglycidether, Polypropylenglykoldiglycidether, Trimethylolpropantriglycidether, Pentaerythrittetraglycidether, Bisphenol-A-diglycidether und Bisphenol-F-diglycidether.

Weitere bevorzugte Epoxide sind cycloaliphatische Epoxide wie 3,4-Epoxycyclohexylmethyl-3,4-epoxycyclohexancarboxylat.

Besonders bevorzugt sind die Poly(meth)acrylate mittels eines Vernetzer-Beschleuniger-Systems ("Vernetzungssystem") vernetzt, um eine bessere Kontrolle sowohl über die Verarbeitungszeit, die Vernetzungskinetik sowie den Vernetzungsgrad zu erhalten. Das Vernetzer-Beschleuniger-System umfasst bevorzugt zumindest eine epoxidgruppenhaltige Substanz als Vernetzer und zumindest eine bei einer Temperatur unterhalb der Schmelztemperatur des zu vernetzenden Polymers für Vernetzungsreaktionen mittels epoxidgruppenhaltiger Verbindungen beschleunigend wirkende Substanz als Beschleuniger.

Als Beschleuniger werden erfindungsgemäß besonders bevorzugt Amine eingesetzt. Diese sind formell als Substitutionsprodukte des Ammoniaks aufzufassen; in den folgenden Formeln sind die Substituenten durch "R" dargestellt und umfassen insbesondere Alkyl- und/oder Arylreste. Besonders bevorzugt werden solche Amine eingesetzt, die mit den zu vernetzenden Polymeren keine oder nur geringfügige Reaktionen eingehen.

Prinzipiell können als Beschleuniger sowohl primäre ($NRH_2$), sekundäre ($NR_2H$) als auch tertiäre Amine ($NR_3$) gewählt werden, selbstverständlich auch solche, die mehrere primäre und/oder sekundäre und/oder tertiäre Aminogruppen aufweisen. Besonders bevorzugte Beschleuniger sind tertiäre Amine wie beispielweise Triethylamin, Triethylendiamin, Benzyldimethylamin, Dimethylaminomethylphenol, 2,4,6-Tris-(N,N-dimethylaminomethyl)-phenol und N,N'-Bis(3-(dimethylamino)propyl)harnstoff. Weitere bevorzugte Beschleuniger sind multifunktionelle Amine wie Diamine, Triamine und/oder Tetramine, zum Beispiel Diethylentriamin, Triethylentetramin, Trimethylhexamethylendiamin.

Weitere bevorzugte Beschleuniger sind Aminoalkohole, insbesondere sekundäre und/oder tertiäre Aminoalkohole, wobei im Falle mehrerer Aminofunktionalitäten pro Molekül bevorzugt mindestens eine, besonders bevorzugt alle Aminofunktionalitäten sekundär und/oder tertiär sind. Besonders bevorzugte, derartige Beschleuniger sind Triethanolamin, N,N-Bis(2-hydroxypropyl)ethanolamin, N-Methyldiethanolamin, N-Ethyldiethanolamin, 2-Aminocyclohexanol, Bis(2-hydroxycyclohexyl)methylamin, 2-(Diisopropylamino)ethanol, 2-(Dibutylamino)ethanol, N-Butyldiethanolamin, N-Butylethanolamin, 2-[Bis(2-hydroxyethyl)amino]-2-(hydroxymethyl)-1,3-propandiol, 1-[Bis(2-hydroxyethyl)amino]-2-propanol, Triisopropanolamin, 2-(Dimethylamino)ethanol, 2-(Diethylamino)ethanol, 2-(2-Dimethylaminoethoxy)ethanol, N,N,N'-Trimethyl-N'-hydroxyethylbisaminoethylether, N,N,N'-Trimethylaminoethylethanolamin und N,N,N'-Trimethylaminopropylethanolamin.

Weitere geeignete Beschleuniger sind Pyridin, Imidazole wie beispielsweise 2-Methylimidazol und 1,8-Diazabicyclo[5.4.0]undec-7-en. Auch cycloaliphatische Polyamine können als Beschleuniger eingesetzt werden. Geeignet sind auch Beschleuniger auf Phosphorbasis wie Phosphine und/oder Phosphoniumverbindungen, beispielsweise Triphenylphosphin oder Tetraphenylphosphoniumtetraphenylborat.

Auch quartäre Ammoniumverbindungen können als Beschleuniger verwendet werden; Beispiele sind Tetrabutylammoniumhydroxid, Cetyltrimethylammoniumbromid und Benzalkoniumchlorid.

Bevorzugte thermische Vernetzer sind neben den kovalent reagierenden Vernetzern wie insbesondere Epoxiden, Isocyanaten und/oder Aziridinen auch koordinative Vernetzer, besonders bevorzugt Metallchelate, insbesondere Aluminium-, Titan-, Zirconium- und/oder Eisenchelate. Es können auch Kombinationen verschiedener Vernetzer, z.B. eine Kombination von einem oder mehreren Epoxiden mit einem oder mehreren Metallchelaten, eingesetzt werden.

Ganz besonders bevorzugte Metallchelate sind Aluminiumchelate, beispielsweise Aluminium(III)-acetylacetonat. Diese Vernetzter werden bevorzugt in einer Menge von 0,01 bis 0,1 Gew.-Teilen, besonders bevorzugt von 0,02 bis 0,08 Gew.-Teilen, jeweils bezogen auf 100 Gew.-Teile des Poly(meth)acrylats (lösemittelfrei), eingesetzt.

Ganz besonders bevorzugte thermische Vernetzer sind Epoxide, insbesondere solche mit tertiären Aminfunktionen wie z.B. Tetraglycidyl meta-Xylendiamin (N,N,N',N'-Tetrakis(oxiranylmethyl)-1,3-benzendimethanamin). Diese Verbindungen werden bevorzugt in einer Menge von 0,03 bis 0,1 Gew.-Teilen, besonders bevorzugt von 0,04 bis 0,07 Gew.-Teilen, jeweils bezogen auf 100 Gew.-Teile des Polyacrylats (lösemittelfrei), eingesetzt.

Die erfindungsgemäße Haftklebmasse umfasst ferner mindestens ein Vinylaromat-Butadien-Blockcopolymer und mindestens ein Vinylaromat-Isopren-Blockcopolymer. Es kann jeweils ein (einziges) Vinylaromat-Butadien-Blockcopolymer und Vinylaromat-Isopren-Blockcopolymer umfasst sein, es können voneinander unabhängig aber auch mehrere Vinylaromat-Butadien-Blockcopolymere und Vinylaromat-Isopren-Blockcopolymere umfasst sein. Bevorzugt umfasst die erfindungsgemäße Haftklebmasse Vinylaromat-Butadien-Blockcopolymere und Vinylaromat-Isopren-Blockcopolymere zu insgesamt 20 bis 30 Gew.-%, bezogen auf das Gesamtgewicht der Haftklebmasse. Die Pluralform "Vinylaromat-Butadien-Blockcopolymere und Vinylaromat-Isopren-Blockcopolymere" schließt ausdrücklich auch den Fall ein, dass die erfindungsgemäße Haftklebmasse jeweils nur ein Vinylaromat-Butadien-Blockcopolymer und/oder Vinylaromat-Isopren-Blockcopolymer umfasst.

Blockcopolymere aus Vinylaromaten und konjugierten Dienen sind dem Fachmann grundsätzlich bekannt. Sowohl das Vinylaromat-Butadien-Blockcopolymer als auch das Vinylaromat-Isopren-Blockcopolymer der erfindungsgemäßen Haftklebmasse können grundsätzlich einen Aufbau der Form A-B, A-B-A, $(A-B)_n$, $(A-B)_nX$ oder $(A-B-A)_nX$ haben,

worin

-   die Blöcke A unabhängig voneinander für einen Vinylaromaten-Block;

-   die Blöcke B unabhängig voneinander für einen Polybutadien- oder Polyisopren-Block;

- X für den Rest eines Kopplungsreagenzes oder Initiators und

- n für eine ganze Zahl ≥ 2 stehen.

Die erfindungsgemäße Haftklebmasse kann auch Gemische verschiedener Vinylaromaten-Blockcopolymere mit einem Aufbau wie vorstehend enthalten.

Die Vinylaromat-Blockcopolymere der Synthesekautschukkomponente der erfindungsgemäßen Haftklebmasse umfassen also einen oder mehrere gummiartige Blöcke B (Weichblöcke) und einen oder mehrere glasartige Blöcke A (Hartblöcke). Besonders bevorzugt ist mindestens eines, ganz besonders bevorzugt sind beide Vinylaromat-Blockcopolymere der erfindungsgemäßen Haftklebmasse ein Blockcopolymer mit einem Aufbau A-B oder A-B-A, wobei für A und B die vorstehenden Bedeutungen gelten.

Bevorzugt ist dementsprechend das Vinylaromat-Isopren-Blockcopolymer ein lineares Blockcopolymer; ebenfalls bevorzugt ist das Vinylaromat-Butadien-Blockcopolymer ein lineares Blockcopolymer; besonders bevorzugt sind sowohl das Vinylaromat-Butadien-Blockcopolymer als auch das Vinylaromat-Isopren-Blockcopolymer lineare Blockcopolymere. Lineare Blockcopolymere haben sich als vorteilhaft für die adhäsiven Eigenschaften der erfindungsgemäßen Haftklebmasse erwiesen.

Bevorzugt weist das Vinylaromat-Butadien-Blockcopolymer einen Vinylaromat-Anteil von mindestens 25 %, besonders bevorzugt von mindestens 28 %, insbesondere von mindestens 30 % auf. Dies wirkt sich nach den im Rahmen der Erfindung gewonnenen Erkenntnissen vorteilhaft auf die innere Festigkeit (Kohäsion) der Haftklebmasse aus.

Das Vinylaromat-Isopren-Blockcopolymer weist dagegen bevorzugt einen Vinylaromat-Anteil von maximal 25 %, besonders bevorzugt von maximal 17 % auf. Dies hat sich als besonders vorteilhaft für die Schockresistenz der Haftklebmasse erwiesen.

In einer Ausführungsform ist das Vinylaromat-Isopren-Blockcopolymer ein radiales Blockcopolymer mit einem Vinylaromat-Anteil von maximal 25 %, insbesondere von maximal 20 %. Auch derartige Blockcopolymere haben sich als vorteilhaft hinsichtlich der Klebkraft und der inneren Festigkeit erwiesen.

Bevorzugt weist das Vinylaromat-Isopren-Blockcopolymer einen Diblock-Anteil von > 50 %, besonders bevorzugt von > 65 %, insbesondere von > 75 % auf. Ebenfalls bevorzugt weist das Vinylaromat-Butadien-Blockcopolymer einen Diblock-Anteil von > 50 %, besonders bevorzugt von > 65 %, insbesondere von > 75 % auf. Hohe Diblock-Anteile, insbesondere des Vinylaromat-Butadien-Copolymers, haben sich als vorteilhaft für die adhäsiven Eigenschaften der Haftklebmasse erwiesen. Besonders bevorzugt weisen sowohl das Vinylaromat-Isopren-Blockcopolymer als auch das Vinylaromat-Butadien-Blockcopolymer einen Diblock-Anteil von > 50 %, besonders bevorzugt von > 65 %, insbesondere von > 75 % auf.

Der Vinylaromat der Vinylaromat-Blockcopolymere der Synthesekautschukkomponente der erfindungsgemäßen Haftklebmasse ist bevorzugt Styrol; bevorzugt sind dementsprechend die Vinylaromat-Blöcke der Vinylaromat-Blockcopolymere Polystyrolblöcke. Bevorzugt ist somit das Vinylaromat-Butadien-Blockcopolymer ein Styrol-Butadien-Blockcopolymer und das Vinylaromat-Isopren-Blockcopolymer ein Styrol-Isopren-Blockcopolymer. Insbesondere ist das Vinylaromat-Butadien-Blockcopolymer ein Styrol-Butadien-Styrol-Blockcopolymer (SBS) und das Vinylaromat-Isopren-Blockcopolymer ein Styrol-Isopren-Styrol-Blockcopolymer (SIS).

Wie sich gezeigt hat, liegt in erfindungsgemäßen Haftklebmassen in der Regel das Poly(meth)acrylat beziehungsweise die Gesamtheit der Poly(meth)acrylate als Matrix beziehungsweise kontinuierliche Phase vor, in der die Vinylaromat-Blockcopolymere als dispergierte Phase eingebettet sind. Im folgenden wird die Synthesekautschukkomponente daher auch als Synthesekautschuk-Phase bezeichnet. Die Synthesekautschuk-Phase kann in der Poly(meth)acrylat-Matrix in unterschiedlichen Morphologien vorliegen.

Das Poly(meth)acrylat und das Gemisch der zwei oder mehreren Vinylaromat-Blockcopolymere sind dementsprechend bevorzugt für sich jeweils homogene Phasen. Die in der Haftklebmasse enthaltenen Poly(meth)acrylate und Vinylaromat-Blockcopolymere sind vorzugsweise bei 23 °C nicht bis zur Homogenität miteinander mischbar. Die erfindungsgemäße Haftklebmasse liegt somit zumindest mikroskopisch und zumindest bei Raumtemperatur bevorzugt in mindestens zweiphasiger Morphologie vor. Besonders bevorzugt sind Poly(meth)acrylat(e) und Vinylaromat-Blockcopolymere in einem Temperaturbereich von 0 °C bis 50 °C, insbesondere von -30 °C bis 80 °C nicht homogen miteinander mischbar, so dass die Haftklebmasse in diesen Temperaturbereichen zumindest mikroskopisch mindestens zweiphasig vorliegt.

Komponenten sind im Sinne dieser Schrift als dann "nicht homogen miteinander mischbar" definiert, wenn sich auch nach innigem Vermischen die Ausbildung zumindest zweier stabiler Phasen physikalisch und/oder chemisch zumindest mikroskopisch nachweisen lässt, wobei die eine Phase reich an der einen Komponente und die zweite Phase reich an der anderen Komponente ist. Ein Vorliegen vernachlässigbar geringer Mengen der einen Komponente in der anderen, das einer Ausbildung der Mehrphasigkeit nicht entgegensteht, wird dabei als unbeachtlich angesehen.

Ein geeignetes Analysesystem für die Phasentrennung ist beispielweise die Raster-Elektronenmikroskopie. Phasenseparation kann sich aber beispielweise auch dadurch erkennen lassen, dass die unterschiedlichen Phasen zwei voneinander unabhängige Glasübergangstemperaturen bei der dynamischen Differenzkalorimetrie (DDK, DSC) aufweisen. Phasentrennung liegt erfindungsgemäß dann vor, wenn sie sich durch mindestens eine der Analysenmethoden eindeutig zeigen lässt.

Innerhalb der Synthesekautschuk-reichen Domänen kann als Feinstruktur zudem zusätzliche Mehrphasigkeit vorliegen, wobei die Vinylaromat-Blöcke eine Phase und die Isopren- und/oder Butadienblöcke eine zweite Phase bilden.

Bevorzugt beträgt das Gewichtsverhältnis Vinylaromat-Butadien-Blockcopolymer(e) : Vinylaromat-Isopren-Blockcopolymer(e) 1,3 : 1 bis 2,3 : 1, besonders bevorzugt 1,5 : 1 bis 2,1 : 1. Bei diesen Gewichtsverhältnissen wurden besonders gute innere Festigkeiten in z-Richtung und besonders hohe Schockresistenz beobachtet.

Die erfindungsgemäße Haftklebmasse umfasst bevorzugt neben den bis hierher aufgeführten Bestandteilen mindestens ein Klebharz. Klebharze und ihre Rolle in Haftklebmassen sind dem Fachmann grundsätzlich bekannt, sie werden allgemein auch als Tackifier oder Klebkraftverstärker bezeichnet. Unter einem "Klebharz" wird entsprechend dem allgemeinem Fachmannverständnis ein oligomeres oder polymeres Harz, das die Autohäsion (den Tack, die Eigenklebrigkeit) der Haftklebmasse im Vergleich zu der keinen Tackifier enthaltenden, ansonsten aber identischen Haftklebmasse erhöht, verstanden.

Das Klebharz der erfindungsgemäßen Haftklebmasse ist mit der Synthesekautschukphase verträglich. Dies bedeutet, dass das Klebharz die Glasübergangstemperatur des nach gründlichem Mischen von Synthesekautschuken und Klebharz erhaltenen Systems im Vergleich zum reinen Gemisch der Synthesekautschuke verändert, wobei auch der Mischung aus Synthesekautschuken und Klebharz nur eine Glasübergangstemperatur zugeordnet werden kann. Ein nicht verträgliches Klebharz würde zu zwei Glasübergangstemperaturen führen, von denen eine dem Synthesekautschukgemisch und die andere den Harz-Domänen zuzuordnen wäre. Die Bestimmung der Glasübergangstemperatur erfolgt in diesem Zusammenhang kalorimetrisch mittels DSC (differential scanning calorimetry) wie hierin schon beschrieben.

Bevorzugt ist das Klebharz ein Kohlenwasserstoffharz; besonders bevorzugt ist es ausgewählt aus der Gruppe bestehend aus hydrierten Polymerisaten des Dicyclopentadiens; nicht, partiell, selektiv oder vollständig hydrierten Kohlenwasserstoffharzen auf Basis von $C_5$-, $C_5/C_9$- oder $C_9$-Monomerströmen; und Polyterpenharzen, insbesondere solchen auf Basis von $\alpha$-Pinen und/oder von $\beta$-Pinen und/oder von $\delta$-Limonen. Die Kohlenwasserstoffharze weisen bevorzugt einen DACP-Wert von mindestens 0 °C, sehr bevorzugt von mindestens 20 °C, und/oder bevorzugt einen MMAP-Wert von mindestens 40 °C, sehr bevorzugt von mindestens 60 °C, auf. Zur Bestimmung von DACP- und MMAP-Werten wird auf C. Donker, PSTC Annual Technical Seminar, Proceedings, S. 149-164, Mai 2001 verwiesen.

Ganz besonders bevorzugt ist das Klebharz ein Polyterpenharz, insbesondere auf Basis von $\alpha$-Pinen und/oder von $\beta$-Pinen und/oder von $\delta$-Limonen.

Bevorzugt umfasst die erfindungsgemäße Haftklebmasse ein oder mehrere Klebharze zu 7 bis 25 Gew.-%, bezogen auf das Gesamtgewicht der Haftklebmasse.

Bevorzugt ist das Klebharz der erfindungsgemäßen Haftklebmasse mit der Poly(meth)acrylatphase nicht verträglich.

In einer Ausführungsform jedoch umfasst die erfindungsgemäße Haftklebmasse ein mit der Synthesekautschukkomponente verträgliches Klebharz und ein weiteres, mit dem oder den Poly(meth)acrylaten verträgliches Klebharz. Bei dem mit dem oder den Poly(meth)acrylaten verträglichen Klebharz handelt es sich bevorzugt um ein (Meth)Acrylatharz, das bevorzugt zu insgesamt < 10 Gew.-% in der Haftklebmasse enthalten ist. Ein solcher Zusatz verbessert die Adhäsion auf polaren Klebuntergründen.

In einer Ausführungsform ist die erfindungsgemäße Haftklebmasse geschäumt. Die Schäumung kann grundsätzlich mittels beliebiger chemischer und/oder physikalischer Methoden erfolgen. Bevorzugt wird eine geschäumte erfindungsgemäße Haftklebmasse jedoch durch das Einbringen und nachfolgende Expandieren von Mikroballons erhalten. Unter "Mikroballons" werden elastische und somit in ihrem Grundzustand expandierbare Mikrohohlkugeln verstanden, die eine thermoplastische Polymerhülle aufweisen. Diese Kugeln sind mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit sind insbesondere Kohlenwasserstoffe der niederen Alkane, beispielsweise Isobutan oder Isopentan geeignet, die als verflüssigtes Gas unter Druck in der Polymerhülle eingeschlossen sind.

Durch ein Einwirken auf die Mikroballons, insbesondere durch eine Wärmeeinwirkung, erweicht die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Wird mittels Mikroballons geschäumt, dann können die Mikroballons als Batch, Paste oder als unverschnittenes oder verschnittenes Pulver der Formulierung zugeführt werden. Dosierpunkte sind beispielsweise vor oder nach dem Zugabepunkt des Poly(meth)acrylats denkbar, etwa gemeinsam als Pulver mit den Synthesekautschuken oder als Paste zu einem späteren Zeitpunkt.

Es ist eine Vielzahl an Mikroballontypen kommerziell erhältlich, welche sich im Wesentlichen über ihre Größe (6

bis 45 μm Durchmesser im unexpandierten Zustand) und ihre zur Expansion benötigten Starttemperaturen (75 bis 220 °C) differenzieren. Unexpandierte Mikroballontypen sind auch als wässrige Dispersion mit einem Feststoffbeziehungsweise Mikroballonanteil von ca. 40 bis 45 Gew.-% erhältlich, weiterhin auch als polymergebundende Mikroballons (Masterbatche), zum Beispiel in Ethylvinylacetat mit einer Mikroballonkonzentration von ca. 65 Gew.-%. Sowohl die Mikroballon-Dispersionen als auch die Masterbatche sind wie die DU-Typen zur Herstellung einer geschäumten erfindungsgemäßen Haftklebmasse geeignet.

Eine geschäumte erfindungsgemäße Haftklebmasse kann auch mit sogenannten vorexpandierten Mikroballons erzeugt werden. Bei dieser Gruppe findet die Expansion schon vor der Einmischung in die Polymermatrix statt. Vorexpandierte Mikroballons sind beispielsweise unter der Bezeichnung Dualite® oder mit der Typenbezeichnung DE (Dry Expanded) kommerziell erhältlich.

Die Dichte einer geschäumten erfindungsgemäßen Haftklebmasse beträgt bevorzugt $< 1.100$ kg/m$^3$, stärker bevorzugt $< 1.000$ kg/m$^3$. Besonders bevorzugt beträgt die Dichte einer geschäumten erfindungsgemäßen Haftklebmasse 800 bis 1.000 kg/m$^3$, insbesondere 850 bis 970 kg/m$^3$.

Je nach Anwendungsgebiet und gewünschten Eigenschaften der erfindungsgemäßen Haftklebmasse können dieser weitere Komponenten und/oder Additive zugesetzt sein, und zwar jeweils allein oder in Kombination mit einem oder mehreren anderen Additiven oder Komponenten.

So kann die erfindungsgemäße Haftklebmasse beispielsweise Pulver- und granulatförmige, insbesondere auch abrasive und verstärkende, Füllstoffe, Farbstoffe und Pigmente wie z. B. Kreiden ($CaCO_3$), Titandioxid, Zinkoxide und/oder Ruße, enthalten.

Bevorzugt enthält die Haftklebmasse eine oder mehrere Kreideform(en) als Füllstoff, besonders bevorzugt Mikrosöhl-Kreide (Fa. Söhlde). Bei bevorzugten Anteilen bis zu 20 Gew.-% verändern sich die klebtechnischen Eigenschaften (Scherfestigkeit bei Raumtemperatur, Sofortklebkraft auf Stahl und PE) durch den Füllstoffzusatz praktisch nicht. Darüber hinaus können verschiedene organische Füllstoffe enthalten sein.

Geeignete Additive für die erfindungsgemäße Haftklebmasse sind außerdem - unabhängig gewählt von anderen Additiven - nicht expandierbare Polymerhohlkugeln, Polymervollkugeln, Glashohlkugeln, Glasvollkugeln, keramische Hohlkugeln, keramische Vollkugeln und/oder Kohlenstoffvollkugeln ("Carbon Micro Balloons").

Weiterhin kann die erfindungsgemäße Haftklebmasse schwerentflammbare Füllstoffe, beispielsweise Ammoniumpolyphosphat; elektrisch leitfähige Füllstoffe, beispielsweise Leitruß, Kohlenstofffasern und/oder silberbeschichtete Kugeln; thermisch leitfähige Materialien wie beispielsweise Bornitrid, Aluminiumoxid, Siliciumcarbid; ferromagnetische Additive, beispielsweise Eisen-(III)-Oxide; organische, nachwachsende Rohstoffe wie beispielsweise Holzmehl, organische und/oder anorganische Nanopartikel, Fasern; Compoundierungsmittel, Alterungsschutzmittel, Lichtschutzmittel und/oder Ozonschutzmittel enthalten.

Optional können Weichmacher enthalten sein. Als Weichmacher können z.B. (Meth)Acrylat-Oligomere, Phthalate, Cyclohexandicarbonsäureester, wasserlösliche Weichmacher, Weichharze, Phosphate oder Polyphosphate zudosiert werden.

Die Beigabe von Kieselsäuren, vorteilhaft von gefällter, mit Dimethyldichlorsilan oberflächenmodifizierter Kieselsäure, kann genutzt werden, um die Wärmescherfestigkeit der Haftklebmasse einzustellen.

Ein Verfahren zur Herstellung einer erfindungsgemäßen Haftklebmasse kann zunächst eine Aufkonzentration der aus der Polymerherstellung resultierenden Polyacrylat-Lösung oder -Dispersion umfassen. Die Aufkonzentration des Polymerisats kann in Abwesenheit von Vernetzer- und Beschleunigersubstanzen geschehen. Es ist aber auch möglich, maximal eine dieser Substanzen dem Polymerisat bereits vor der Aufkonzentration zuzusetzen, so dass die Aufkonzentration dann in Gegenwart dieser Substanz(en) erfolgt.

Die Synthesekautschuke und gegebenenfalls ein oder mehrere Klebharze können über einen Feststoffdosierer in einen Compounder gegeben werden. Über einen Sidefeeder kann das aufkonzentrierte und ggf. schon aufgeschmolzene Poly(meth)acrylat in den Compounder eingebracht werden. In besonderen Ausführungen des Verfahrens ist es auch möglich, dass Aufkonzentration und Compoundierung im selben Reaktor stattfinden. Die Harze können auch über eine Harzschmelzeinheit und einen weiteren Sidefeeder an anderer Verfahrensposition, z. B. nach Eingabe von Synthesekautschuken und Poly(meth)acrylat, zugeführt werden.

Weitere Additive und/oder Weichmacher können ebenfalls als Feststoffe oder Schmelze oder auch als Batch in Kombination mit einer anderen Formulierungskomponente zugeführt werden.

Insbesondere kann als Compounder ein Extruder eingesetzt werden. Die Polymere liegen im Compounder bevorzugt in der Schmelze vor, entweder weil sie bereits im Schmelzezustand eingegeben werden oder indem sie im Compounder bis zur Schmelze erhitzt werden. Vorteilhafterweise werden die Polymere im Compounder durch Beheizung in der Schmelze gehalten.

Sofern Beschleunigersubstanzen für die Vernetzung des Poly(meth)acrylats eingesetzt werden, werden diese bevorzugt erst kurz vor der Weiterverarbeitung der weitgehend fertig abgemischten Masse, insbesondere erst kurz vor einer Beschichtung oder anderweitigen Ausformung, zugesetzt. Das Zeitfenster der Zugabe vor der Beschichtung richtet sich insbesondere nach der zur Verfügung stehenden Topfzeit, also der Verarbeitungszeit in der Schmelze, ohne dass die Eigenschaften des resultierenden Produktes nachteilig verändert werden.

Die Vernetzer, beispielsweise Epoxide, und die Beschleuniger können auch beide kurz vor der Weiterverarbeitung der Zusammensetzung zugesetzt werden, also vorteilhaft in der Phase, wie sie vorstehend für die Beschleuniger dargestellt ist. Hierzu ist es vorteilhaft, wenn Vernetzer und Beschleuniger an ein- und derselben Stelle gleichzeitig in den Prozess eingebracht werden, gegebenenfalls als Epoxid-Beschleuniger-Abmischung. Grundsätzlich ist es auch möglich, die Zugabezeitpunkte bzw. Zugabestellen für Vernetzer und Beschleuniger in den oben dargestellten Ausführungen zu vertauschen, so dass der Beschleuniger vor den Vernetzersubstanzen zugesetzt wird.

Nach der Compoundierung der Masse kann ihre Weiterverarbeitung, insbesondere die Beschichtung auf einen permanenten oder auf einen temporären Träger, erfolgen. Ein permanenter Träger bleibt bei der Anwendung mit der Klebemassenschicht verbunden, während der temporäre Träger im weiteren Verarbeitungsprozess, zum Beispiel im Rahmen der Konfektionierung des Klebebandes, oder bei beziehungsweise kurz vor der finalen Verwendung der Haftklebmasse von der Klebmasseschicht entfernt wird.

Die Beschichtung der Selbstklebmassen kann mit dem Fachmann grundsätzlich bekannten Hotmelt-Beschichtungsdüsen oder bevorzugt mit Walzenauftragswerken, auch Beschichtungskalander genannt, erfolgen. Die Beschichtungskalander können vorteilhaft aus zwei, drei, vier oder mehr Walzen bestehen.

Bevorzugt ist zumindest eine der Walzen mit einer anti-adhäsiven Walzenoberfläche versehen. Bevorzugt sind alle Walzen des Kalanders, die mit der Haftklebmasse in Berührung kommen, anti-adhäsiv ausgerüstet. Als anti-adhäsive Walzenoberfläche wird bevorzugt ein Stahl-Keramik-Silikon-Verbundwerkstoff eingesetzt. Derartige Walzenoberflächen sind gegen thermische und mechanische Belastungen resistent.

Es hat sich als besonders vorteilhaft herausgestellt, wenn Walzenoberflächen eingesetzt werden, die eine Oberflächenstruktur aufweisen, insbesondere in der Art, dass die Fläche keinen vollständigen Kontakt zur zu verarbeitenden Masseschicht herstellt, sondern dass die Kontaktfläche - verglichen mit einer glatten Walze - geringer ist. Besonders günstig sind strukturierte Walzen wie Metall-Rasterwalzen, beispielsweise Stahlrasterwalzen.

Sofern die erfindungsgemäße Haftklebmasse geschäumt werden soll, kann die Schäumung grundsätzlich sowohl im Compounder als auch nach dem Ausbringen der Masse erfolgen. Im Sinne einer erleichterten Verarbeitbarkeit der Haftklebmassezusammensetzung kann es bevorzugt sein, die Masse zuerst in einem Hotmelt-Verfahren, zum Beispiel wie vorstehend beschrieben, herzustellen und dabei auch ein Schäumungsmittel, zum Beispiel Mikroballons, einzuarbeiten, die Schäumung beziehungsweise Expansion der Masse aber erst nach dem Verlassen des Compounders durchzuführen. Wie sich gezeigt hat, kann auf diese Weise gerade für mit Mikroballons geschäumte Massen eine Verringerung der Oberflächenrauigkeit erzielt werden. Bei einer derartigen Vorgehensweise muss allerdings dafür Sorge getragen werden, dass es nicht schon im Compounder zur Expansion der Masse beziehungsweise der Mikroballons kommt. Dies lässt sich durch eine entsprechende Druck-Temperatur-Steuerung im Compounder erreichen.

Ein weiterer Gegenstand der Erfindung ist ein Klebeband, das mindestens eine Schicht einer erfindungsgemäßen Haftklebmasse umfasst. Erfindungsgemäße Haftklebmassen eignen sich besonders für die Ausbildung hoher Schichtdicken. Die Dicke der vorstehenden Schicht einer erfindungsgemäßen Haftklebmasse beträgt daher bevorzugt 100 $\mu$m bis 5000 $\mu$m, besonders bevorzugt 150 $\mu$m bis 3000 $\mu$m, insbesondere 200 $\mu$m bis 2500 $\mu$m, beispielsweise 500 $\mu$m bis 2000 $\mu$m.

Bevorzugt besteht das erfindungsgemäße Klebeband aus einer Schicht einer erfindungsgemäßen Haftklebmasse. In diesem Fall handelt es sich also um ein sogenanntes Transferklebeband. Die Haftklebmasse kann aber auch als Trägerschicht eines ein- oder doppelseitigen Klebebands vorliegen oder mindestens eine der haftklebrigen äußeren Schichten eines trägerhaltigen ein- oder doppelseitigen Klebebands bilden. Ein Releaseliner, wie er üblicherweise zum (temporären) Schutz von Haftklebmassen auf diesen aufgebracht wird, wird nicht als Bestandteil eines Klebebands angesehen. Dementsprechend kann das erfindungsgemäße Klebeband lediglich aus einer Schicht einer erfindungsgemäßen Haftklebmasse bestehen, auch wenn diese mit einem Releaseliner abgedeckt ist.

Ein weiterer Gegenstand der Erfindung ist die Verwendung einer erfindungsgemäßen Haftklebmasse oder eines erfindungsgemäßen Klebebands als Klebmittel in der Herstellung elektronischer, optischer oder feinmechanischer Geräte, insbesondere portabler elektronischer, optischer oder feinmechanischer Geräte.

Derartige portable Geräte sind insbesondere:

Fotoapparate, Digitalkameras, Fotografie-Zubehörgeräte (wie Belichtungsmesser, Blitzlichtgeräte, Blenden, Fotogehäuse, Objektive etc.), Filmkameras, Videokameras Kleincomputer (Mobilcomputer, Taschencomputer, Taschenrechner), Laptops, Notebooks, Netbooks, Ultrabooks, Tablet-Computer, Handhelds, elektronische Terminkalender und Organisatoren (sogenannte "Electronic Organizer" oder "Personal Digital Assistants", PDA, Palmtops), Modems;

Computer-Zubehörgeräte und Bedieneinheiten für elektronische Geräte, wie Mäuse, Zeichenpads, Grafiktabletts, Mikrophone, Lautsprecher, Spielkonsolen, Gamepads, Fernsteuerungen, Fernbedienungen, Tastfelder ("Touchpads");

Monitore, Displays, Bildschirme, berührungsempfindliche Bildschirme (Sensorbildschirme, "Touchscreen-Geräte"), Beamer;

Lesegeräte für elektronische Bücher ("E-Books");

Kleinfernsehgeräte, Taschenfernseher, Filmabspielgeräte, Videoabspielgeräte Radios (auch Klein- und Taschenrundfunkgeräte), Walkmen, Discmen, Musikabspielgeräte für zum Beispiel CD, DVD, Bluray, Kassetten, USB, MP3, Kopfhörer Schnurlose Telefone, Mobiltelefone, Smartphones, Funksprechgeräte, Freisprechgeräte, Personenrufgeräte (Pager, Pieper);

Mobile Defibrillatoren, Blutzuckermessgeräte, Blutdruckmessgeräte, Schrittzähler, Pulsmesser;

Taschenlampen, Laserpointer;

Mobile Detektoren, optische Vergrößerungsgeräte, Fernsichtgeräte, Nachtsichtgeräte, GPS-Geräte, Navigationsgeräte, tragbare Schnittstellengeräte der Satellitenkommunikation;

Datenspeichergeräte (USB-Sticks, externe Festplatten, Speicherkarten); und

Armbanduhren, Digitaluhren, Taschenuhren, Kettenuhren, Stoppuhren.

Insbesondere wird eine erfindungsgemäße Haftklebmasse oder ein erfindungsgemäßes Klebeband als Klebmittel in der Herstellung von Smartphones (Mobiltelefonen), Tablets, Notebooks, Kameras, Videokameras, Tastauren oder Touchpads verwendet.

Beispiele

Prüfmethoden

Test 1: Sofortklebkraft auf Kunststoff

Die Bestimmung der Klebkraft auf Kunststoff erfolgte bei einem Prüfklima von 23 °C +/- 1 °C Temperatur und 50 % +/- 5 % rel. Luftfeuchte, als Kunststoffsubstrat wurde eine Platte aus mit 30 % Glasfaser verstärktem PBT mit einer Oberflächenrauigkeit von 1 $\mu$m eingesetzt.

Die Prüfplatte wurde vor der Messung zwecks Reinigung und Konditionierung zunächst mit Ethanol abgewischt und danach 5 Minuten an der Luft liegen gelassen, damit das Lösungsmittel abdampfen konnte. Die dem Prüfuntergrund abgewandte Seite des einschichtigen Klebebands wurde dann mit 36 $\mu$m geätzter PET-Folie abgedeckt, wodurch verhindert wurde, dass sich das Muster bei der Messung dehnt. Danach erfolgte das Anrollen des Prüfmusters auf den Kunststoffuntergrund. Hierzu wurde das Tape mit einer 2 kg - Gummirolle zweimal hin und her mit einer Aufrollgeschwindigkeit von 10 m/min überrollt. Unmittelbar nach dem Anrollen wurde das Klebeband in einem Winkel von 180 ° vom Kunststoffsubstrat abgezogen, wobei die dazu erforderliche Kraft mit einer Zwick-Zugprüfmaschine gemessen wurde. Die Messergebnisse sind in N/cm angegeben und sind gemittelt aus drei Einzelmessungen.
Als gutes Ergebnis wird eine Klebkraft von 5,5 N/cm und größer angesehen.

Test 2: Stretching in z-Richtung (Static Load)

Die so genannte Static Load - Testmethode dient sowohl der Bestimmung der Halteleistung als auch der Bestimmung der Auslenkung des Klebebands in z-Richtung.
Aus dem zu untersuchenden Klebeband wurde eine quadratische, rahmenförmige Probe ausgeschnitten (Außenmaße 33 mm x 33 mm; Stegbreite 2 mm; Innenmaße (Fensterausschnitt) 29 mm x 29 mm). Diese Probe wurde auf einen mit Aceton gereinigten Stahl-Rahmen (Außenmaße 45 mm x 45 mm; Stegbreite 10 mm; Innenmaße (Fensterausschnitt) 25 mm x 25 mm) geklebt. Auf der anderen Seite des Klebebandes wurde ein mit Aceton gereinigtes Stahl-Fenster (Außenmaße 35 mm x 35 mm) verklebt. Die Verklebung von Stahl-Rahmen, Klebebandrahmen und Stahl-Fenster erfolgte derart, dass die geometrischen Zentren und die Diagonalen jeweils übereinanderlagen (Eck-auf-Eck). Die Verklebungsfläche betrug 248 mm$^2$. Die Verklebung wurde für 5 s mit 248 N gepresst und für 72 Stunden bei 23 °C / 50 % relativer Feuchte gelagert.
Auf der der Verklebung gegenüberliegenden Seite des Stahl-Fensters wurde mit einem geeigneten Klebeband vollflächig ein sogenannter T-Block mit den Grundmaßen 20 x 20 mm aus Stahl appliziert. Der so entstandene Prüfkörper wurde mit dem T-Block nach unten zeigend in ein Gestell eingehängt, bei dem der Prüfkörper auf dem Rahmen des Stahlrahmens aufliegt und das Fenster mit dem T-Block dementsprechend ohne Kontakt zum Gestell nach unten zeigt. An den T-Block wird zum Starten des Tests ein 1000 g-Gewicht gehängt. Sofort danach wird die Auslenkung des Klebebandes als Startwert bestimmt. Dafür wird mit einem Messschieber in allen vier Ecken der Abstand zwischen der Außenseite des Stahlrahmens und der Innenseite des Fensters gemessen (also Materialstärke des Stahlrahmens + Verklebung). Diese Messung wird nach 2 h, 5 h, 24 h, 48 h, 72 h, 144 h und 196 h wiederholt.

Es wird jeweils über den Mittelwert der vier Messpunkte bestimmt, inwieweit sich die Auslenkung der Verklebung geändert hat und ob die Verklebung noch intakt ist.

Als Ergebnis werden sowohl die Haltezeit als auch die Auslenkung von jeweils drei Prüfkörpern notiert.

Gute Ergebnisse zeigen eine Auslenkung $\leq$ 0,02 mm und eine Halteleistung > 168 h.

Test 3: DuPont-Test in z-Richtung (Durchschlagzähigkeit)

Aus dem zu untersuchenden Klebeband (Haftklebstreifen) wurde eine quadratische, rahmenförmige Probe ausgeschnitten (Außenmaße 33 mm x 33 mm; Stegbreite 2,0 mm; Innenmaße (Fensterausschnitt) 29 mm x 29 mm). Diese Probe wurde auf einen Polycarbonat- (PC-) Rahmen (Außenmaße 45 mm x 45 mm; Stegbreite 10 mm; Innenmaße (Fensterausschnitt) 25 mm x 25 mm; Dicke 3 mm) geklebt. Auf der anderen Seite des Klebebands wurde ein PC-Fenster von 35 mm x 35 mm geklebt. Die Verklebung von PC-Rahmen, Klebebandrahmen und PC-Fenster erfolgte derart, dass die geometrischen Zentren und die Diagonalen jeweils übereinanderlagen (Eck-auf-Eck). Die Verklebungsfläche betrug 248 mm$^2$. Die Verklebung wurde für 5 s mit 248 N gepresst und für 24 Stunden konditioniert bei 23 °C / 50 % relativer Feuchte gelagert.

Unmittelbar nach der Lagerung wurde der Klebeverbund aus PC-Rahmen, Klebeband und PC-Fenster mit den überstehenden Kanten des PC-Rahmens derart in eine Probenhalterung gespannt, dass der Verbund waagerecht ausgerichtet war und das PC-Fenster sich unterhalb des Rahmens befand. Die Probenhalterung wurde anschließend in die vorgesehene Aufnahme des "DuPont Impact Tester" zentrisch eingesetzt. Der 190 g schwere Schlagkopf wurde so eingesetzt, dass die kreisförmige Aufschlaggeometrie mit dem Durchmesser von 20mm auf die Fensterseite des PC-Fensters zentrisch und bündig auflag.

Auf den so angeordneten Verbund aus Probenhalterung, Probe und Schlagkopf wurde senkrecht ein an zwei Führungsstangen geführtes Gewicht mit einer Masse von 150 g aus einer Höhe von 5 cm fallengelassen (Messbedingungen 23 °C, 50 % relative Feuchte). Die Höhe des Fallgewichtes wurde in 5 cm Schritten so lange erhöht bis die eingebrachte Stoßenergie die Probe durch die Schlagbelastung zerstörte und das PC-Fenster sich vom PC Rahmen löste.

Um Versuche mit unterschiedlichen Proben vergleichen zu können, wurde die Energie wie folgt berechnet:

$$E\ [J] = \text{Höhe [m]}* \text{Gewicht [kg]}* 9,81\ m/s^2$$

Es wurden fünf Proben pro Produkt getestet und der Energiemittelwert als Kennzahl für die Durchschlagzähigkeit angegeben.

Test 4: Droptower-Test (Durchschlagzähigkeit)

Die Droptower-Testmethode als instrumentierter Fallwerktest dient ebenfalls der Messung der Durchschlagzähigkeit.

Aus dem zu untersuchenden Klebeband wurde eine quadratische, rahmenförmige Probe ausgeschnitten (Außenmaße 33mm x 33mm; Stegbreite 2,0mm; Innenmaße (Fensterausschnitt) 29mm x 29mm). Diese Probe wurde auf einen mit Aceton gereinigten Stahl-Rahmen (Außenmaße 45mm x 45mm; Stegbreite 10mm; Innenmaße (Fensterausschnitt) 25mm x 25mm) geklebt. Auf der anderen Seite des Klebebands wurde ein mit Aceton gereinigtes Stahl-Fenster (Außenmaße 35mm x 35mm) verklebt. Die Verklebung von Stahl-Rahmen, Klebebandrahmen und Stahl-Fenster erfolgte derart, dass die geometrischen Zentren und die Diagonalen jeweils übereinanderlagen (Eck-auf-Eck). Die Verklebungsfläche betrug 248 mm$^2$. Die Verklebung wurde für 5 s mit 248 N gepresst und für 24 Stunden konditioniert bei 23 °C / 50 % relativer Feuchte gelagert.

Unmittelbar nach der Lagerung wurde der Prüfkörper derart in der Probenhalterung des instrumentierten Fallwerkes eingesetzt, dass der Verbund waagerecht, mit nach unten ausgerichtetem Stahlfenster vorlag. Die Messung erfolgte instrumentell und automatisch unter Nutzung eines Belastungsgewichtes von 5 kg und einer Fallhöhe von 10 cm. Durch die eingebrachte kinetische Energie des Belastungsgewichtes wurde die Verklebung durch Bruch des Klebebandes zwischen Fenster und Rahmen zerstört, wobei die Kraft von einem piezoelektrischen Sensor im µs Takt aufgezeichnet wurde. Die zugehörige Software gab dementsprechend nach der Messung den Graphen für den Kraft-Zeit-Verlauf an, woraus sich die Maximalkraft $F_{max}$ bestimmen ließ. Kurz vor dem Aufprall der rechteckigen Aufschlaggeometrie auf das Fenster wurde die Geschwindigkeit des Fallgewichtes mit zwei Lichtschranken bestimmt. Unter der Annahme, dass die eingebrachte Energie groß gegenüber der Schlagzähigkeit der Verklebung ist, wurde aus dem Kraftverlauf, der benötigten Dauer bis zur Ablösung und der Geschwindigkeit des Fallgewichtes die geleistete Arbeit der Verklebung bis zur vollständigen Ablösung ermittelt, d.h. die Ablösearbeit. Es wurden von jeder Probe fünf Prüfkörper untersucht, das Endergebnis der Schlagzähigkeit besteht aus dem Mittelwert der Ablösearbeit beziehungsweise der Maximalkraft dieser fünf Proben.

Herstellung des Polyacrylats:

Ein für radikalische Polymerisationen konventioneller 300 l - Reaktor wurde mit 47 kg n-Butylacrylat, 20 kg Methylacrylat, 30 kg 2-Phenoxyethylacrylat, 3 kg Acrylsäure und 72,4 kg Benzin/Aceton (70:30) befüllt. Nach 45minütiger Durchleitung von Stickstoffgas unter Rühren wurden der Reaktor auf 58 °C hochgeheizt und 50 g Vazo® 67 (2,2'-Azobis(2-methylbutyronitril) hinzugegeben. Anschließend wurde die Manteltemperatur auf 75 °C erwärmt und die Reaktion konstant bei dieser Außentemperatur durchgeführt. Nach 1 h Reaktionszeit wurden 10 g Vazo® 67 hinzugegeben. Nach 3 h wurde mit 20 kg Benzin/Aceton (70:30) und nach 6 h mit 10 kg Benzin/Aceton (70:30) verdünnt. Zur Reduktion der Restinitiatoren wurden nach 5,5 und nach 7 h jeweils 0,15 kg Perkadox® 16 (Di(4-tert-butylcyclohexyl)peroxydicarbonat) hinzugegeben. Die Reaktion wurde nach 24 h Reaktionszeit abgebrochen und auf Raumtemperatur abgekühlt. Die Lösung wurde auf einen Feststoffgehalt von 38 Gew.-% eingestellt.

Herstellung der Haftklebmassen

Beispiel 1:

In einem Planetwalzenextruder wurden über einen Feststoffdosierer die Synthesekautschuke (Bezeichnungen nachstehend, Gewichtsverhältnisse siehe Tabelle 1) als Granulat aufgeschmolzen. Nachfolgend wurden das in einem Einschneckenextruder aufkonzentrierte und vorgeschmolzene Polyacrylat, das Polyterpenharz Dercolyte® A115, die Mikroballons (Expancel® 920DU40; Nouryon) und eine Farbpaste (Levanyl® N-FL) zudosiert. Der Mischung wurde zudem ein Vernetzer (Uvacure® 1500) zugesetzt. Die Schmelze wurde durchmischt und über einen Zweiwalzenkalander zwischen zwei Trennfolien (silikonisierte PET-Folie) zu einer Schicht mit einer Dicke von 200 μm ausgeformt.
Die Zusammensetzung der resultierenden Klebmasseschichten war wie folgt: 57 Gew.-% Polyacrylat, 24 Gew.-% Synthesekautschuk (Zusammensetzung gemäß Tabelle 1), 18 Gew.-% Dercolyte® A115, 0,3 Gew.-% Vernetzer, 0,7 Gew.-% Mikroballons.

Verwendete Synthesekautschuke:

| SK1: | Quintac® 3520 (lineares SIS, Zeon; 78 % Diblockanteil; Styrolgehalt 15 %) |
| SK2: | Kraton® 1118 (lineares SBS, Kraton; 78 % Diblockanteil; Styrolgehalt 33 %) |
| SK4: | Quintac® 3280 (lineares SIS, Zeon; 17 % Diblockanteil; Styrolgehalt 25 %) |
| SK5: | Quintac® Q SL 196 (lineares SIS, Zeon; 58 % Diblockanteil, Styrolgehalt 18 %) |

Tabelle 1: Zusammensetzungen und Ergebnisse

| Nr. | Synthesekautschuke Gewichtsverhältnis | Sofortklebkraft 180 ° (N/cm) | Stretching z-Richtung Auslenkung (mm) | Stretching z-Richtung Haltedauer (h), Fehlerrate | Du Pont - Test (J) (Bruchbild) | Droptower-Test (J/N) (Bruchbild) |
|---|---|---|---|---|---|---|
| 1 | SK2 : SK1 2 : 1 | 7,5 | 0,01 | > 168 h, 0/3 | 0,53 (A) | 1,58 / 1590 (f.s.) |
| 2 | SK2 : SK1 1,5 : 1 | 8,0 | 0,02 | > 168 h, 0/3 | 0,56 (A) | 1,47 / 1283 (f.s.) |
| 3 | SK2 : SK1 1,3 : 1 | 5,7 | 0,01 | > 168 h, 0/3 | 0,35 (A) | 0,83 / 1270 (A) |

(fortgesetzt)

| Nr. | Synthesekautschuke Gewichtsverhältnis | Sofortklebkraft 180 ° (N/cm) | Stretching z-Richtung Auslenkung (mm) | Stretching z-Richtung Haltedauer (h), Fehlerrate | Du Pont - Test (J) (Bruchbild) | Droptower-Test (J/N) (Bruchbild) |
|---|---|---|---|---|---|---|
| 4 | SK2 : SK1 2 : 1 | 7,64 | 0,01 | > 168 h, 0/3 | nicht ermittelt | nicht ermittelt |
| 5 (n.e.) | SK1 | 4,0 | 0,03 | < 72 h, 3/3 | 0,29 (A) | 0,46 / 1332 (A) |
| 6 (n.e.) | SK2 | 5,3 | 0,01 | > 168 h, 0/3 | 0,15 (A) | 0,32 / 1209 (A) |
| 7 (n.e.) | SK2 : SK1 1 : 1 | 8,3 | 0,03 | > 168 h, 0/3 | 0,36 (A) | 1,32 / 1632 (A) |
| 8 (n.e.) | SK2 : SK1 3 : 1 | 7,1 | 0,01 | $\leq$ 168 h, 1/3 | 0,31 (A) | 0,59 / 1067 (A) |
| 9 (n.e.) | SK1 | 5,34 | nicht messbar | < 144 h, 3/3 | nicht ermittelt | nicht ermittelt |
| 10 (n.e.) | SK5 | 5,17 | 0,01 | > 168 h, 2/3 | nicht ermittelt | nicht ermittelt |
| 11 (n.e.) | SK4 | 5,14 | 0,0 | > 168 h, 0/3 | nicht ermittelt | nicht ermittelt |

n.e. - nicht erfindungsgemäß;
A - Adhäsionsbruch;
f.s. - foam split, Schaumspalten

**Patentansprüche**

1. Haftklebmasse, umfassend:

   a) mindestens 50 Gew.-%, bezogen auf das Gesamtgewicht der Haftklebmasse, mindestens eines Poly(meth)acrylats;
   b) 15 - 35 Gew.-%, bezogen auf das Gesamtgewicht der Haftklebmasse, einer Synthesekautschukkomponente, umfassend mindestens ein Vinylaromat-Butadien-Blockcopolymer und mindestens ein Vinylaromat-Isopren-Blockcopolymer; und
   c) mindestens ein mit der Synthesekautschukkomponente verträgliches Klebharz;

   **dadurch gekennzeichnet, dass** das Gewichtsverhältnis Vinylaromat-Butadien-Blockcopolymer(e) : Vinylaromat-Isopren-Blockcopolymer(e) 1,1 : 1 bis 2,5 : 1 beträgt.

2. Haftklebmasse gemäß Anspruch 1, **dadurch gekennzeichnet, dass** die Haftklebmasse Poly(meth)acrylat(e) zu maximal 70 Gew.-% umfasst.

3. Haftklebmasse gemäß einem der Ansprüche 1 und 2, **dadurch gekennzeichnet, dass** das Gewichtsverhältnis Vinylaromat-Butadien-Blockcopolymer(e) : Vinylaromat-Isopren-Blockcopolymer(e) 1,3 : 1 bis 2,3 : 1 beträgt.

4. Haftklebmasse gemäß einem der vorstehenden Ansprüche, **dadurch gekennzeichnet, dass** sowohl das Vinylaromat-Butadien-Blockcopolymer als auch das Vinylaromat-Isopren-Blockcopolymer lineare Blockcopolymere sind.

5. Haftklebmasse gemäß einem der vorstehenden Ansprüche, **dadurch gekennzeichnet, dass** das Vinylaromat-Butadien-Blockcopolymer einen Vinylaromatanteil von mindestens 25 % aufweist.

**6.** Haftklebmasse gemäß einem der vorstehenden Ansprüche, **dadurch gekennzeichnet, dass** das Vinylaromat-Isopren-Blockcopolymer einen Vinylaromatanteil von maximal 20 % aufweist.

**7.** Haftklebmasse gemäß einem der vorstehenden Ansprüche, **dadurch gekennzeichnet, dass** das Vinylaromat-Butadien-Blockcopolymer ein Styrol-Butadien-Blockcopolymer ist und das Vinylaromat-Isopren-Blockcopolymer ein Styrol-Isopren-Blockcopolymer ist.

**8.** Haftklebmasse gemäß einem der vorstehenden Ansprüche, **dadurch gekennzeichnet, dass** das Klebharz ein Polyterpenharz ist.

**9.** Haftklebmasse gemäß einem der vorstehenden Ansprüche, **dadurch gekennzeichnet, dass** die Haftklebmasse geschäumt ist.

**10.** Klebeband, umfassend mindestens eine Schicht einer Haftklebmasse gemäß einem der vorstehenden Ansprüche.

**11.** Verwendung einer Haftklebmasse gemäß einem der Ansprüche 1 bis 9 und/oder eines Klebebands gemäß Anspruch 10 als Klebmittel in der Herstellung elektronischer Geräte.

**Claims**

**1.** Pressure sensitive adhesive comprising:

a) at least 50% by weight, based on the total weight of the pressure sensitive adhesive, of at least one poly(meth)acrylate;
b) 15 -35% by weight, based on the total weight of the pressure sensitive adhesive, of a synthetic rubber component comprising at least one vinylaromatic-butadiene block copolymer and at least one vinylaromatic-isoprene block copolymer; and
c) at least one tackifying resin compatible with the synthetic rubber component;

**characterized in that** the weight ratio of vinylaromatic-butadiene block copolymer(s): vinylaromatic-isoprene block copolymer(s) is 1.1: 1 to 2.5: 1.

**2.** Pressure sensitive adhesive according to Claim 1, **characterized in that** the pressure sensitive adhesive comprises poly(meth)acrylate(s) to an extent of not more than 70% by weight.

**3.** Pressure sensitive adhesive according to either of Claims 1 and 2, **characterized in that** the weight ratio of vinylaromatic-butadiene block copolymer(s): vinylaromatic-isoprene block copolymer(s) is 1.3: 1 to 2.3: 1.

**4.** Pressure sensitive adhesive according to any of the preceding claims, **characterized in that** both the vinylaromatic-butadiene block copolymer and the vinylaromatic-isoprene block copolymer are linear block copolymers.

**5.** Pressure sensitive adhesive according to any of the preceding claims, **characterized in that** the vinylaromatic-butadiene block copolymer has a vinylaromatic content of at least 25%.

**6.** Pressure sensitive adhesive according to any of the preceding claims, **characterized in that** the vinylaromatic-isoprene block copolymer has a vinylaromatic content of at most 20%.

**7.** Pressure sensitive adhesive according to any of the preceding claims, **characterized in that** the vinylaromatic-butadiene block copolymer is a styrenebutadiene block copolymer and the vinylaromatic-isoprene block copolymer is a styrene-isoprene block copolymer.

**8.** Pressure sensitive adhesive according to any of the preceding claims, **characterized in that** the tackifying resin is a polyterpene resin.

**9.** Pressure sensitive adhesive according to any of the preceding claims, **characterized in that** the pressure sensitive adhesive has been foamed.

10. Adhesive tape comprising at least one layer of a pressure sensitive adhesive according to any of the preceding claims.

11. Use of a pressure sensitive adhesive according to any of Claims 1 to 9 and/or of an adhesive tape according to Claim 10 as bonding means in the production of electronic devices.

**Revendications**

1. Matière auto-adhésive, comprenant :

   a) au moins 50 % en poids, par rapport au poids total de la matière auto-adhésive, d'au moins un poly(méth) acrylate ;
   b) 15 - 35 % en poids, par rapport au poids total de la matière auto-adhésive, d'un composant caoutchouc synthétique comprenant au moins un copolymère à blocs vinylaromatique-butadiène et au moins un copolymère à blocs vinylaromatique-isoprène ; et
   c) au moins une résine adhésive compatible avec le composant caoutchouc synthétique ;

   **caractérisé en ce que** le rapport en poids copolymère(s) à blocs vinylaromatique-butadiène : copolymère(s) à blocs vinylaromatique-isoprène vaut de 1,1 : 1 à 2,5 : 1.

2. Matière auto-adhésive selon la revendication 1, **caractérisée en ce que** la matière auto-adhésive comprend un/des poly(méth)acrylate(s) à raison d'au maximum 70 % en poids.

3. Matière auto-adhésive selon l'une quelconque des revendications 1 et 2, **caractérisée en ce que** le rapport en poids copolymère(s) à blocs vinylaromatique-butadiène : copolymère(s) à blocs vinylaromatique-isoprène vaut de 1,3 : 1 à 2,3 : 1.

4. Matière auto-adhésive selon l'une quelconque des revendications précédentes, **caractérisée en ce qu'**aussi bien le copolymère à blocs vinylaromatique-butadiène que le et le copolymère à blocs vinylaromatique-isoprène sont des copolymères à blocs linéaires.

5. Matière auto-adhésive selon l'une quelconque des revendications précédentes, **caractérisée en ce que** la fraction copolymère à blocs vinylaromatique-butadiène présente une proportion de vinylaromatique d'au moins 25 %.

6. Matière auto-adhésive selon l'une quelconque des revendications précédentes, **caractérisée en ce que** la fraction copolymère à blocs vinylaromatique-isoprène présente une proportion de vinylaromatique d'au maximum 20 %.

7. Matière auto-adhésive selon l'une quelconque des revendications précédentes, **caractérisée en ce que** le copolymère à blocs vinylaromatique-butadiène est un copolymère à blocs styrène-butadiène et le copolymère à blocs vinylaromatique-isoprène est un copolymère à blocs styrène-isoprène.

8. Matière auto-adhésive selon l'une quelconque des revendications précédentes, **caractérisée en ce que** la résine adhésive est une résine polyterpène.

9. Matière auto-adhésive selon l'une quelconque des revendications précédentes, **caractérisée en ce que** la matière auto-adhésive est expansée.

10. Ruban adhésif, comprenant une couche d'une matière auto-adhésive selon l'une quelconque des revendications précédentes.

11. Utilisation d'une matière auto-adhésive selon l'une quelconque des revendications 1 à 9 et/ou d'un ruban adhésif selon la revendication 10 en tant qu'adhésif dans la fabrication d'appareils électroniques.

Zeichnung

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4107233 A
- EP 0349216 A1
- EP 0352901 A1
- EP 0437068 A2
- WO 9519393 A1
- WO 2008070386 A1
- WO 2000006637 A1
- EP 2832811 A1
- WO 2015189323 A1

**In der Beschreibung aufgeführte Nicht-Patentliteratur**

- Satas, Handbook of Pressure Sensitive Adhesives Technology. 1999, 153-203
- **P. E. HINKAMP**. *Polymer*, 1967, vol. 8, 381
- **C. DONKER**. *PSTC Annual Technical Seminar, Proceedings*, May 2001, 149-164